(19) Europäisches Patentamt
European Patent Office
Office européen des brevets

(11) **EP 2 908 495 A1**

(12) **EUROPEAN PATENT APPLICATION**

(43) Date of publication:
**19.08.2015 Bulletin 2015/34**

(51) Int Cl.:
**H04L 29/06** *(2006.01)*  **G06F 21/55** *(2013.01)*

(21) Application number: **15153865.9**

(22) Date of filing: **04.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.02.2014 US 201414183298**

(71) Applicant: **Palo Alto Research Center Incorporated
Palo Alto, California 94304 (US)**

(72) Inventors:
• **Eldardiry, Hoda M.A.
San Carlos, CA California 94070 (US)**
• **Bart, Evgeniy
Sunnyvale, CA California 94086 (US)**
• **Liu, Juan J.
Milpitas, CA California 95035 (US)**
• **Price, Robert R.
Palo Alto, CA California 94306 (US)**
• **Hanley, John
Palo Alto, CA California 94304 (US)**
• **Brdiczka, Oliver
Mountain View, CA California 94304 (US)**

(74) Representative: **Lord, Michael
Gill Jennings & Every LLP
The Broadgate Tower
20 Primrose Street
London EC2A 2ES (GB)**

(54) **System and method for modeling behavior change and consistency to detect malicious insiders**

(57) One embodiment of the present invention provides a system for identifying anomalies. During operation, the system obtains work practice data associated with a plurality of users. The work practice data includes a plurality of user events. The system further categorizes the work practice data into a plurality of domains based on types of the user events, models user behaviors within a respective domain based on work practice data associated with the respective domain, and identifies at least one anomalous user based on modeled user behaviors from the multiple domains.

FIG. 1

Printed by Jouve, 75001 PARIS (FR)

## Description

## STATEMENT OF GOVERNMENT-FUNDED RESEARCH

This invention was made with U.S. government support under Contract No. W911NF-11-C-0216 (3729) awarded by the Army Research Office. The U.S. government has certain rights in this invention.

## BACKGROUND

## Field

This disclosure is generally related to the detection of malicious insiders. More specifically, this disclosure is related to a system that detects malicious insiders by modeling behavior changes and consistencies.

## Related Art

The detection of malicious insiders plays a very important role in preventing disastrous incidents caused by insiders in a large organization, such as a corporation or a government agency. By detecting anomalous behaviors of an individual, the organization may intervene or prevent the individual from committing a crime that may harm the organization or society at large. For example, an intelligence agency may monitor behaviors of its employees and notice that a particular person may exhibit signs of discontent with respect to certain government policies. Early intervention, such as preventing the person from accessing sensitive information, for example confidential government documents, may prevent the person from leaking the sensitive information to outside parties. The detected anomalies are often presented to an analyst, who will conduct further investigation.

## SUMMARY

One embodiment of the present invention provides a system for identifying anomalies. During operation, the system obtains work practice data associated with a plurality of users. The work practice data includes a plurality of user events. The system further categorizes the work practice data into a plurality of domains based on types of the user events, models user behaviors within a respective domain based on work practice data associated with the respective domain, and identifies at least one anomalous user based on modeled user behaviors from the multiple domains.

In a variation on this embodiment, the plurality of domains includes one or more of: a logon domain, an email domain, a Hyper Text Transfer Protocol (HTTP) domain, a file domain, and a device domain.

In a variation on this embodiment, modeling the user behaviors within the respective domain involves constructing feature vectors for the plurality of users based on the work practice data associated with the respective domain, and applying a clustering algorithm to the feature vectors, wherein a subset of users are clustered into a first cluster.

In a further variation, the system further calculates an anomaly score associated with a respective user within a second domain based on a probability that the user is clustered into a second cluster into which other users within the subset of users are clustered.

In a variation on this embodiment, modeling the user behaviors within a respective domain further involves modeling changes in the user behaviors within the respective domain by clustering users within the respective domain based on work practice data associated with a time instance.

In a further variation, modeling the changes in the user behaviors further involves calculating a probability of a user transitioning from a first cluster at a time instance to a second cluster at a subsequent time instance.

In a variation on this embodiment, identifying at least one anomalous user involves calculating a weighted sum of anomaly scores associated with the at least one anomalous user from the plurality of domains.

## BRIEF DESCRIPTION OF THE FIGURES

FIG. 1 presents a diagram illustrating an exemplary computing environment, in accordance with an embodiment of the present invention.

FIG. 2 presents a diagram that provides a visual demonstration of the stand-alone anomaly and a blend-in anomaly.

FIG. 3 presents a flowchart illustrating the process of multi-domain anomaly detection, in accordance with an embodiment of the present invention.

FIG. 4 presents a diagram illustrating an exemplary scenario of a detected multi-domain inconsistency, in accordance with an embodiment of the present invention.

FIG. 5 presents a diagram illustrating pseudocode for an algorithm that combines anomaly scores from multiple domains, in accordance with an embodiment of the present invention.

FIG. 6 presents a flowchart illustrating a process of detecting the temporal inconsistencies, in accordance with an embodiment of the present invention.

FIG. 7 presents a diagram illustrating a high-level description of the anomaly-detection framework, in accordance with an embodiment of the present invention.

FIG. 8 illustrates an exemplary computer system for multi-domain, temporal anomaly detection, in accordance with one embodiment of the present invention.

In the figures, like reference numerals refer to the same figure elements.

## DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention provide a solution for detecting malicious insiders based on large amounts of work practice data. More specifically, the system monitors the users' behaviors and detects two types of anomalous activities: the blend-in anomalies (where malicious insiders try to behave similarly to a group to which they do not belong), and the unusual change anomalies (where malicious insiders exhibit changes in their behaviors that are different from their peers' behavior changes). Users' activities are divided into different domains, and each domain is modeled based on features describing the activities within the domain. During operation, the system observes users' activities and clusters the users into different peer groups based on their activities in each domain. The system detects unusual behavior changes by comparing a user's behavior changes with behavior changes of his peers. The system can also detect peer-group inconsistency of a user by monitoring the user's peer group over time, and across all domains.

### Categorization of Work Practice Data

Malicious insiders pose significant threats to information security. Employees authorized to access internal information may cause harm to the organization by leaking sensitive information to outside parties or by performing sabotage operations. Detection of anomalous behaviors plays an important role in identifying potentially malicious insiders, making it possible to diffuse the potential threat before damage is done. In order to detect the anomalous behaviors, many approaches make use of the readily available work practice data, which can include users' various work-related activities on their company-issued or personal computers, such as logging on/off, accessing websites, sending and receiving emails, accessing external devices or files, etc. Each type of activity may include multiple attributes, which can provide a more detailed description of each activity. For example, the logging-on activity may include attributes such as "the number of after-hours logons" and "the number of logons from a non-user PC;" and the receiving-email activity may include attributes such as "number of recipients" and "number of emails."

Note that here the term "computers" may be used to refer to various types of computing devices, including but not limited to: a work station, a desktop computer, a laptop computer, a tablet computer, a smartphone, a personal digital assistant (PDA), etc.

The prevalence of the computers, especially the mobile devices, and the diversity of applications running on those computers make the work practice data vast, diverse, and heterogeneous. Data in different categories often exhibits drastically different behaviors, and demands different processing and analysis techniques. Combining data from different categories can be technically challenging. For example, certain models may attempt to concatenate different feature vectors from different categories into a single feature vector. However, such an approach may not work because features from different categories may have different ranges or scales. The lack of proper scaling prevents the model from distinguishing among different types of activities, and limits the model's ability to treat and draw conclusions about different activity types appropriately. In addition, a large number of features can compromise model accuracy due to overfitting or excessive model complexity, and can lead to performance degradation and scalability issues.

To overcome such problems, in some embodiments of the present invention, different types of work practice data (or different types of user activities) are categorized into different domains, with attributes associated with each activity type treated as an independent set of domain features. For example, attributes associated with the logging on/off activities may include number of logons, number of computers with logons, number of after-hours logons, number of logons on a dedicated computer, and number of logons on other employees' dedicated computers, etc. These attributes can be included in a feature set for the logon/logoff domain. Once the attributes are defined for each domain, the anomaly-detection system uses a per-domain modular approach that treats each domain independently.

The modular approach can provide a number of advantages that include, but are not limited to: the per-domain clustering ability, the per-domain learning ability, the per-domain modeling and analysis ability, the adaptability to new data, increased scalability, the ability to fuse information from multiple domains, and the ability to establish a global, cross-domain model.

In some embodiments, the work practice data are divided into six domains, including a logon domain, an HTTP domain, an email-sent domain, an email-received domain, a device domain, and a file domain. The logon domain includes logon and logoff events. The feature set associated with the logon domain may include features such as the number of logons, the number of computers with logon activities, the number of after-hours logons, the number of logons on the user's dedicated computer, the number of logons on other employees' dedicated computers, etc. The HTTP domain includes HTTP (Hypertext Transfer Protocol) access events, such as web browsing or uploading/downloading. The feature set associated with the HTTP domain may include features such as the number of web visits, the number of computers with web visits, the number of uniform resource locators (URLs) visited, the number of after-hours web visits, the number of URLs visited from other employees' dedicated computers, etc. The email-sent domain includes email-sending events. The feature set associated with the email-sent domain may include features such as the number of emails, the number of distinct recipients, the number of internal emails sent, the number of emails sent after hours, the number of emails sent with attachments, the number of emails sent from computers dedicated to other employees, etc. The email-received domain includes email-receiving events. The feature set associated with the email-received domain is similar to the one associated with the email-sent domain. In some embodiments, the email-sent domain and the email-received domain may be combined to form an email domain. The device domain includes events related to usages of removable devices, such as USB drives or removable hard disks. The feature set associated with the device domain may include features such as the number of device accesses, the number of computers with device accesses, the number of after-hours device accesses, the number of device accesses on the user's dedicated computer, the number of device accesses on other employees' dedicated computers, etc. The file domain includes file access events, such as creating, copying, moving, modifying, renaming, and deleting of files. The feature set associated with the file domain may include features such as the number of file accesses, the number of computers with file accesses, the number of distinct files, the number of after-hours file accesses, the number of file accesses on the user's dedicated computer, the number of file accesses on other employees' dedicated computers, etc.

Existing anomaly-detection approaches often ignore the inhomogeneity of the work practice data and only focus on statistical outliers. For example, certain techniques define a probability distribution over the work practice data and classify data points with abnormally small probabilities as anomalies or outliers. Sometimes the anomalies are identified separately in each domain, and are combined in an ad-hoc manner (i.e., they are determined manually, rather than learned automatically from the data). For example, users who are outliers in only one domain might be ignored or be flagged as anomalous for having the most extreme anomaly score in such a domain.

While these techniques can be successful in detecting outliers in separate domains, there are limitations. Notably, users who are not outliers in any of the domains will never be labeled as outliers based on these techniques even if these are malicious users. For example, consider a scenario where a user logs on to multiple machines each day. Such behavior is normal if the user is a system administrator who is supposed to log on to multiple machines each day and send emails about system administration issues; the same behavior will be abnormal if the user is a software engineer, whose normal behavior is to log on to a single machine and send emails about software development. However, using the aforementioned techniques, this behavior will never be labeled as anomalous because such techniques examine the log on domain separately from the email domain, and do not treat logging on to multiple machines as an outlier. Similarly, when data in the email domain is examined, no anomaly will be detected. Therefore, a malicious software engineer who logs in to multiple machines daily searching for vulnerable data will remain undetected if each domain is analyzed separately.

To solve such problems, some embodiments of the present invention build a global model for the entire set of available domains, and find outliers in that global model. Note that, as described previously, when establishing the global model, the different domains remain separate at the feature construction (input treatment) stage. It is at the modeling (learning and inference) and scoring (output/decision) stages when the multiple domains are combined. There are two advantages to this modeling strategy. First, the anomaly scores from multiple domains are combined not in an ad-hoc manner, but rather in a data-driven manner. Second, this strategy allows detection of anomalous behaviors that are not by themselves anomalous in any single domain.

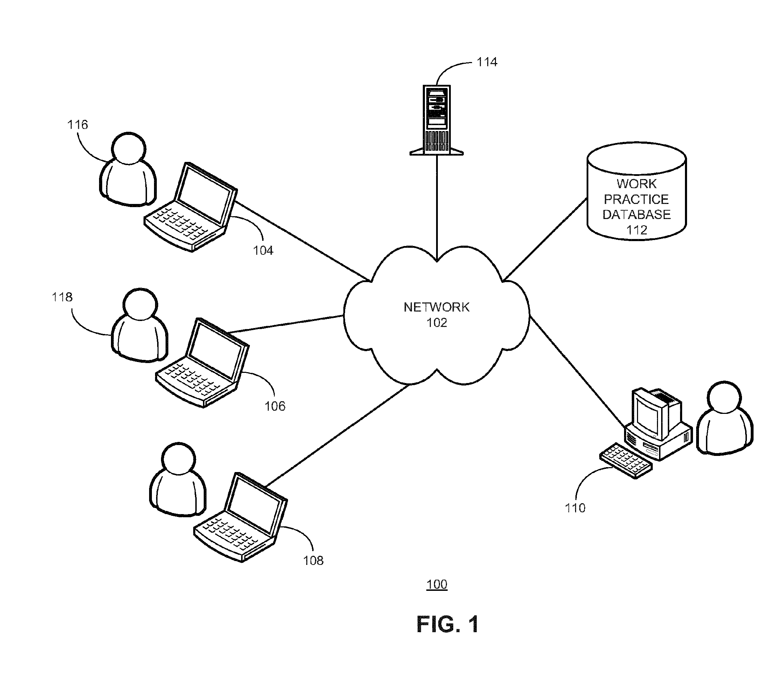

FIG. 1 presents a diagram illustrating an exemplary computing environment, in accordance with an embodiment of the present invention. Computing environment 100 can generally include any type of computer system including, but not limited to, a computer system based on a microprocessor, a mainframe computer, a digital signal processor, a portable computing device, a personal organizer, a device controller, and a computational engine within an appliance. In the example illustrated in FIG. 1, computing environment 100 includes a network 102, a number of client machines 104, 106, 108, and 110, a work practice database 112, and an anomaly-detection server 114.

Network 102 can generally include any type of wired or wireless communication channel capable of coupling together computing nodes. This includes, but is not limited to, a local area network (LAN), a wide area network (WAN), an enterprise's intranet, a virtual private network (VPN), and/or a combination of networks. In one embodiment of the present invention, network 102 includes the Internet. Network 102 may also include telephone and cellular networks, such as Global System for Mobile Communications (GSM) networks or Long Term Evolution (LTE) networks

Client machines 104-110 can generally include any nodes on a network with computational capability and a mechanism for communicating across the network. General users, such as users 116 and 118, perform their daily activities on these client machines. The clients can include, but are not limited to: a workstation, a personal computer (PC), a laptop computer, a tablet computer, a smartphone, and/or other electronic computing devices with network connectivity. Furthermore, the client machines may couple to network 102 using wired and/or wireless connections. In one embodiment, each client machine includes a mechanism that is configured to record activities performed by the general users.

Work practice database 112 can generally include any type of system for storing data associated with the electronically recorded activities in non-volatile storage. This includes, but is not limited to, systems based upon magnetic, optical, and magneto-optical storage devices, as well as storage devices based on flash memory and/or battery-backed up memory. In one embodiment, the client machines 104-110 send their recorded work practice data to work practice database 112 via network 102.

Anomaly-detection server 114 includes any computational node having a mechanism for running anomaly-detection algorithms. In addition, anomaly-detection server 114 is able to output a suspect list, which identifies individuals with abnormal behaviors. In some embodiments, anomaly-detection server 114 is capable of outputting a list that ranks all users based on their anomaly scores. A security analyst can view the list and determine which individuals need to be investigated further.

## Definition of Anomalies

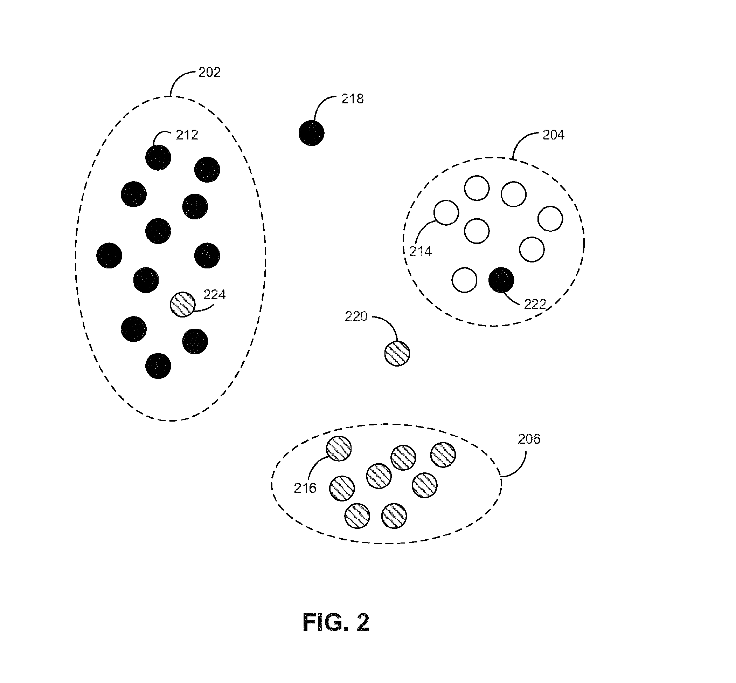

Embodiments of the present invention provide a solution that is capable of detecting malicious insiders based on three types of anomalies: the stand-alone anomalies, the blend-in anomalies, and the anomalies due to temporal inconsistencies. FIG. 2 presents a diagram that provides a visual demonstration of a stand-alone anomaly and a blend-in anomaly. In FIG. 2, the employees (each is a data point and can be represented by a circle) are clustered based on their job roles. For example, software engineers, such as a software engineer represented by a solid circle 212, are clustered together as a cluster 202; system administrators, such as a system administrator represented by a hollow circle 214, are clustered together as a cluster 204; and staff members in the human resources (HR) department, such as an HR staff represented by a hatched circle 216, are clustered together as a cluster 206. Note that for privacy purposes, work practice data typically do not include information related to the job roles, and a machine-learning technique is often used to cluster the employees in the feature space of their work practice data. In some embodiments, the clustering can be performed in a single domain. For example, the clustering outcome of FIG. 2 can be obtained in the logon domain.

From FIG. 2, one can see that a number of data points, such as data point 218 and data point 220, do not fall into any clusters. These data points are statistical outliers, and represent stand-alone anomalies. This type of anomaly can often be detected by conventional approaches. FIG. 2 also demonstrates that a data point is clustered into a cluster that is not consistent with its job role. For example, the job role of data point 222 is software engineer. However, this data point is clustered into cluster 204, which mainly consists of system administrators. Similarly, data point 224 is an HR staff member, and this data point is clustered into cluster 202, which mainly consists of software engineers. Data points 222 and 224 represent the blend-in anomaly and are often ignored by conventional approaches. The third type of anomaly, the temporal anomaly, is not shown in FIG. 2. Temporal anomalies are those that exhibit unusual patterns over a certain time period.

## Multi-Domain Anomaly Detection

To detect blend-in anomalies, the system needs to analyze work practice data in all domains. However, instead of having a single top-down model that includes all features from all domains, which can result in difficulty of inference due to the large size of the data set, separate models for each domain are built. Each domain is first analyzed separately, and the system then analyzes interdependence among the various domains. In some embodiments, the anomaly-detection system can use a two-stage modeling process. The first stage is to build single-domain models within each individual domain. Note that building a single-domain model can include obtaining the maximum likelihood estimate (MLE) for model parameters in the corresponding domain. In further embodiments, the single-domain models are based on a Gaussian mixture model (GMM), where the maximum a posteriori probability (MAP) values for the cluster to which each user belongs within each domain are obtained. The second stage is to use the single-domain model parameters in a global model as if they were fixed. Note that if the data in each domain is relatively unambiguous (i.e., each single-domain model can be determined with sufficient accuracy), the loss in accuracy is small. In some embodiments, the global cross-domain model is based on the MAP cluster indices. In the end, information from multiple domains is fused to generate an output.

The multi-domain anomaly-detection system detects anomalous users based on the assumption that an anomalous user is the one who exhibits inconsistent behaviors across the multiple domains. In general, a user's activity should reflect the user's job role in any domain, and users with similar job roles should exhibit similar behaviors within each domain. As shown in FIG. 2, the software engineers (solid circles) exhibit similar behaviors and are clustered together. In addition, each user should belong to the cluster of the same set of users across multiple domains. For example, a user who behaves similarly to (and hence belongs to the same cluster as) engineers within the "HTTP" domain, based on her web-browsing activities, should also belong to the same cluster as engineers within the "logon" domain. If such a user belongs to a different cluster in the "logon" domain (say, the cluster for system administrators), this can indicate suspicious behavior in which an engineer frequently logs on to multiple machines. Such cross-domain behavior inconsistency can be used to identify anomalies. In some embodiments, this problem is formulated as a classification task, in which clusters (as identified by cluster indices) are used as features. The system can predict a user's cluster in one domain based on her cluster indices in all other domains. The prediction accuracy for a user's cluster in each domain reflects her behavior consistency across domains.

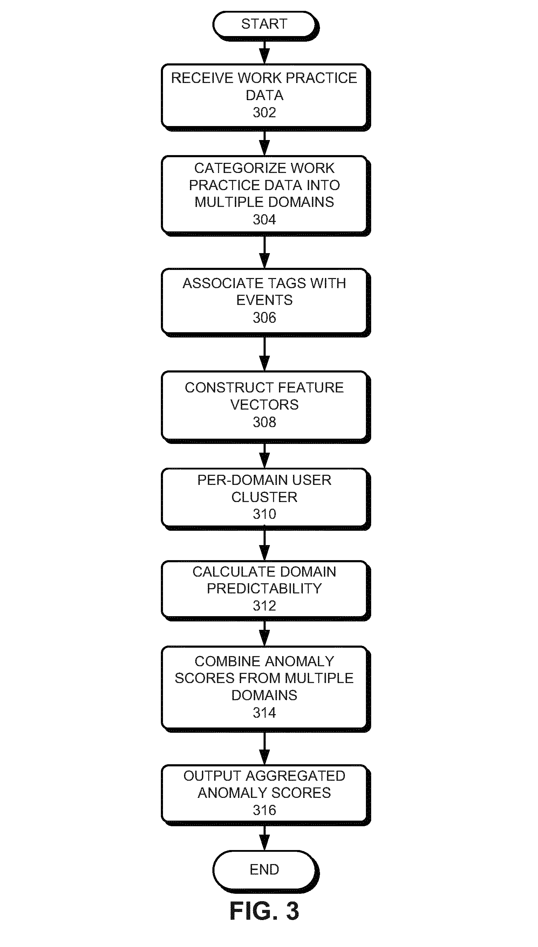

FIG. 3 presents a flowchart illustrating the process of multi-domain anomaly detection, in accordance with an embodiment of the present invention. During operation, the multi-domain anomaly-detection system receives a large amount of work practice data for a large number of users, which are often employees of a large company or a government agency, over a certain time period (operation 302). Note that each event recorded in the work practice data is tagged with auxiliary information such as user ID, computer ID, activity code (which identifies activity as logon, logoff, file download, file upload, web-browsing, etc.), and a timestamp. The work practice data are then categorized into multiple domains (operation 304). In some embodiments, the domains may include, but are not limited to: a logon domain, an HTTP domain, an email-sent/received domain, a file domain, and a device domain. Within each domain, the system associates a set of tags with raw events according to the domain attributes (operation 306). For example, each event may be tagged to indicate whether it occurs during normal business hours or after hours; or it may be tagged to indicate whether it occurs on a user's own designated computer, someone else's designated computer, or a shared computer. Note that such information is crucial because malicious insiders often need to steal information from their colleagues, or perform illegal activity after hours. In addition, events concerning activities external to the organization (e.g., emails sent to or received from external addresses, and files uploaded/downloaded from external URLs) are labeled. Domain-specific tags can also be applied to the raw event. For example, for the email domain, a tag is applied to indicate whether the email includes an attachment. Note that in real-life settings, a user can accumulate a large number of events every single day. For example, a data set with 4600 users may have approximately 89 million records per day.

Subsequently, the system constructs feature vectors for each domain (operation 308), and clusters users based on the constructed feature vectors within each domain (operation 310). Note that the feature set for each domain includes domain-specific attributes. Given that the users' job roles are unknown to the system, such a clustering provides modeling of those hidden job roles. As discussed previously, users with similar job roles tend to behave similarly, and hence would belong to the same cluster within each domain. In some embodiments, the system applies a $k$-means clustering technique to the feature vectors. Other clustering techniques are also possible. As described in the previous session, the single-domain model can be based on a Gaussian mixture modeling (GMM). Note that the advantage of this per-domain learning scheme is to provide a simpler model with lower levels of errors due to variance in learning, thus improves the model's accuracy and reducing the risk of overfitting. The per-domain learning scheme also enhances the model's interpretability. Moreover, treating each activity domain separately provides more flexibility, since a different type of model can be used for different activity domains as appropriate. For example, some models make certain assumptions about correlations of features. Such assumptions can be violated in some, but not all, domains.

Once per-domain clustering is achieved, the system calculates a predictability of a certain user in a certain domain to detect the multi-domain inconsistency (operation 312). The maximum a posteriori probability (MAP) cluster indices from the single-domain models for each user $u$ form a cluster vector $c_u$, where $c_{ui}$ is the MAP cluster index for user $u$ in domain $i$. For user $u$, his behavior in domain $i$ is consistent with other domains, if the cluster index $c_{ui}$ is predictable from other domains' cluster indices $\{c_{uj}\}_{j \neq i}$. In the simplest case, the system may use cluster indices of other users ($w \neq u$) to learn a mapping from $\{c_{wj}\}_{j \neq i}$ to $c_{wi}$, and then check whether this mapping generalizes to user $u$. In some embodiments, the prediction of a user's cluster index in a target domain can be formulated as a multi-label classification task, in which a classifier is trained from the clustering information from all but one domain to predict the cluster information in the remaining domain or the target domain.

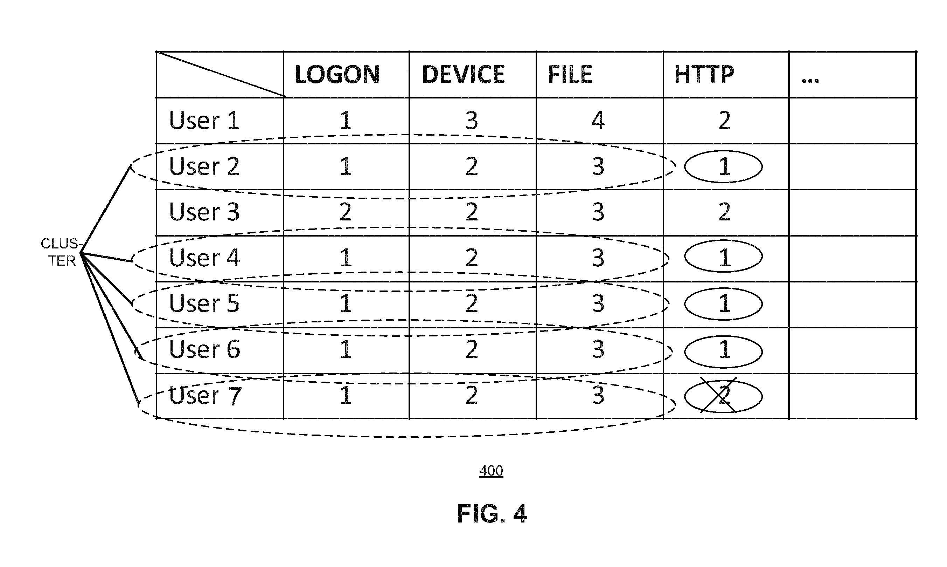

FIG. 4 presents a diagram illustrating an exemplary scenario of a detected multi-domain inconsistency, in accordance with an embodiment of the present invention. In FIG. 4, table 400 lists the per-domain clustering outcomes for users 1 through 7 with each cell showing the cluster index of a certain user in a certain domain. For example, in the logon domain, user 1 is clustered into cluster 1; in the device domain, user 1 is clustered into cluster 3; in the file domain, user 1 is clustered into cluster 4, and so on. The system can then train a classifier using cluster information from the first three domains, the logon domain, the device domain, and the file domain. From FIG. 4, one can tell that users 2 4, 5, 6, and 7 belong to same clusters in the three domains. The system can then try to predict the cluster indices for these users in the HTTP domain. Users 2, 4, 5, and 6 are all in cluster 1 in the HTTP domain. Hence, the system may predict that user 7 should be in cluster 1 in the HTTP domain as well. However, in the example shown in FIG. 4, user 7 is clustered into cluster 2 in the HTTP domain. This then indicates a cross-domain inconsistency for user 7 in the HTTP domain, and user 7 can be labeled as an anomaly in the HTTP domain. In some embodiments, the system assigns an anomaly score to user 7 for the HTTP domain. Note that the anomaly score can be determined based on the overall prediction accuracy in the target domain (in this example the HTTP domain) for all other users. The idea is that if the domain is difficult to predict in general, then incorrect predictions should not be penalized as severely; in contrast, for a very predictable domain, any incorrect predictions may be quite suspicious. In the example shown in FIG. 4, the cluster indices of all other users in the HTTP domain are correctly predicted, which can result in user 7 being assigned a higher anomaly score. Note that even though the anomaly scores are computed per domain, they are informed by other domains and thus can take into account information from all domains.

When detecting the multi-domain inconsistency, the system may establish various models to measure the predictability of a cluster index in a target domain. In some embodiment, three different models, a discrete model, a hybrid model, and a continuous model, can be used to measure the predictability. The difference among these three models lies in the granularity of the cluster information used as features for learning and evaluation.

For example, the discrete model uses discrete features and provides discrete evaluation outcome. More specifically, the discrete model uses cluster labels (indices) from the observed domains as features for learning, and predicts cluster labels to evaluate user predictability. The predictability is measured as the Hamming distance between the prediction and the observation (i.e., 0 if the prediction is correct, and 1 otherwise). The hybrid model uses cluster labels from the observed domains as features for learning, and predicts cluster labels to evaluate user predictability. However, unlike the discrete model, in the hybrid model, the evaluation is not based just on whether or not the true cluster is predicted, but instead, is based on how well the true cluster is predicted. This is, in essence, a density-estimation problem. The predictability is measured as 1 minus the likelihood of observing the true cluster index given the cluster index of its peers. In other words, the hybrid model uses discrete features and provides continuous evaluation outcome. On the other hand, the continuous model uses continuous features and provides continuous evaluation outcome. More specifically, the continuous model uses a vector of cluster probabilities as features, and also predicts the cluster probability vector for the target domain.

Returning to FIG. 3, once the domain predictability is calculated for each domain using the aforementioned multi-domain cross-validation technique, the system combines anomaly scores from the multiple domains or sources (operation 314). In some embodiments, the anomaly scores are combined as a weighted sum calculated similarly to the way in which TF/IDF (term frequency/inverse document frequency) values are used in information-retrieval and text-mining. Particularly, given multiple anomaly scores for each user, drawn from multiple sources of information provided by the various domains, the goal is to combine the scores into a final score for each user. As previously discussed, if a domain is difficult to predict in general, an incorrect prediction should not be punished severely, and a smaller weight should be assigned to such a domain.

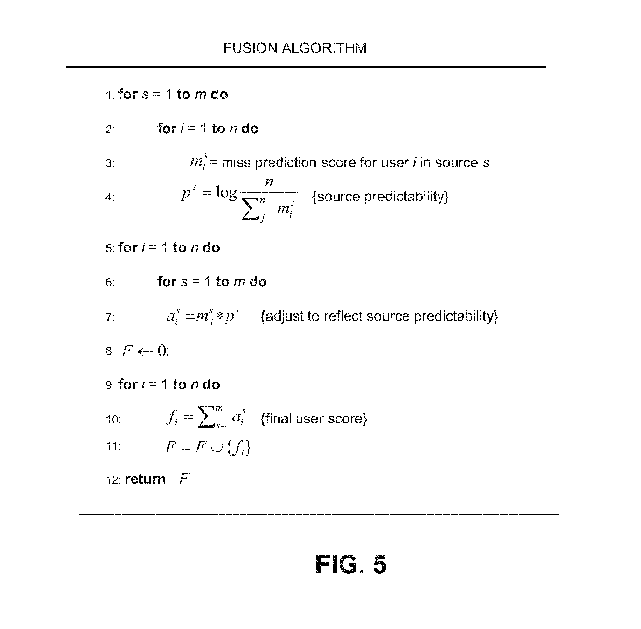

FIG. 5 presents a diagram illustrating the pseudocode for an algorithm that combines anomaly scores from multiple domains, in accordance with an embodiment of the present invention. Given $m$ scores from $m$ sources for each of the $n$ users, the fusion algorithm proceeds in two steps. The first step calculates the weights for each source $s$ to reflect the differences in the domain or source predictabilities. Highly predictable domains are assigned larger weights, and vice versa. In some embodiments, the weight function ($p^s$) is calculated as a logarithm of the ratio of the number of the users to the total sum of miss prediction scores of all users. The second step computes, for each user $i$, the weighted anomaly score $a$ for each source s, then aggregates the weighted anomaly scores from each source to compute the final anomaly score $f$. The system then outputs the aggregated anomaly scores (operation 316). In some embodiments, the system may generate a rank list of the users based on the anomaly scores.

## Temporal Anomaly Detection

In addition to the blend-in anomalies that can be detected using the aforementioned multi-domain cross-validation technique, it is also desirable to detect anomalies that exhibit temporal inconsistency. Note that while a particular behavior may not be suspicious, a change in behavior that is rare can be. Conventional anomaly-detection approaches often rely on detecting temporal anomalies that correspond to a sudden change in a user's behavior when compared to his past behavior. For example, if a user suddenly starts to work a lot after hours, he may be labeled as an anomaly by the conventional approach. However, such a behavior change may be normal if the user is facing a deadline or takes up a new responsibility. Hence, conventional approaches that analyze users independently can have a high false positive rate, which can increase investigation costs and distract attention from actual malicious insiders.

To avoid mistakenly flagging users who change their behavior in a non-malicious manner, in some embodiments, the system models the activity changes of similar subsets of the population (e.g., users with similar job roles), and evaluates how well a particular user conforms to change patterns that are most likely to occur within the user's subpopulation. In other words, to decide whether a user is suspicious, the system compares each user's activity changes to activity changes of his peer group.

The problem of detecting temporal inconsistency can be defined as follows. An anomalous user is the one who exhibits changes in behavior that are unusual compared to his peers. The intuition is that user activity should reflect the user's job role in any domain, and users with similar job roles should exhibit similar behavior changes within each domain, over time. Although peers will not be expected to exhibit similar changes in behavior at each similar time, they will be expected to do so over longer time intervals. In some embodiments, the model considers that peers are expected to experience similar changes; however, those changes do not necessarily have to take place at the same time.

Similar to the approach that detects blend-in anomalies, here users are also clustered based on their activities, such that a cluster that a user is assigned to indicates the type of behavior this user exhibits. In addition, a change in user behavior is indicated by a change in the cluster that this user gets assigned to. Over a relatively long period of time, peers are expected to transition among the same subset of clusters. For examples, engineers will be seen to transition between clusters 2 and 4 in the logon domain, and among clusters 3, 4 and 5 in the email domain. So an engineer who transitions between clusters 2 and 5 in the logon domain is considered suspicious. The less likely this transition is among the engineer's peers, the more suspicious it is.

To build a temporal model, some embodiments of the present invention use day as a time unit, and the work practice data (which includes large amount of event records) are binned into (user, day) records. For each (user, day) pair, the system can construct a feature vector for each domain using domain-specific attributes.

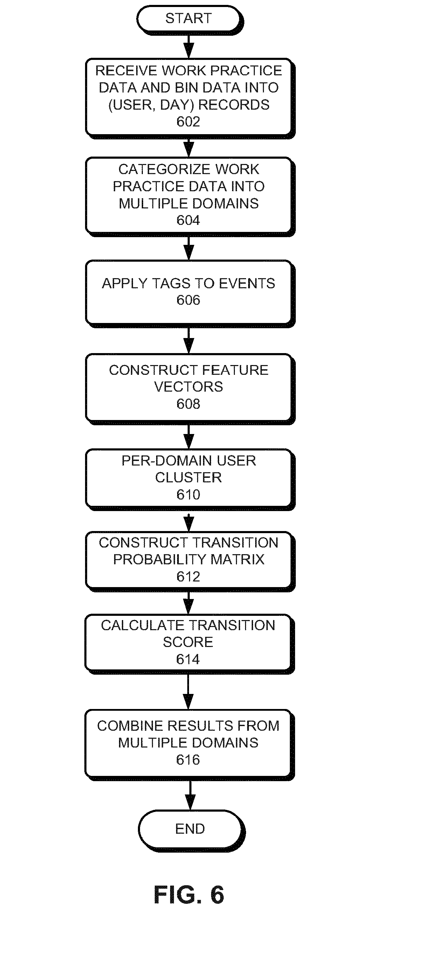

FIG. 6 presents a flowchart illustrating a process of detecting the temporal inconsistencies, in accordance with an embodiment of the present invention. During operation, the system receives a large amount of work practice data and bins the recorded events into user-day records (operation 602). Note that other time units, such as week or month, can also be used depending on the desired temporal granularity. In each bin of a (user, day) pair, the system categorizes the events into different domains (operation 604), applies domain-appropriate tags to raw events (606), and then constructs a feature vector for each (user, day) pair in each domain (operation 608). Operations 604-608 are similar to operations 304-308 except that here the aggregated statistics are collected for work practice data associated with each (user, day) pair.

Subsequently, the system clusters the users based on the constructed feature vectors (operation 610). Note that unlike the previous approach where the clustering is performed on features over the entire time span, here the clustering is performed on the users' daily behavior features. Moreover, the system constructs a transition probability matrix $Q_d$ for each domain $d$ (operation 612). In some embodiments, the system computes $Q_d$ by computing the transition probability $q_d(c_k, c_m)$ be-

tween each possible cluster pair $(c_k, c_m)$ by counting the number of such changes aggregating over all users and all time instances.

The system then models users' behavior changes and detects temporal anomalies in each domain by calculating a transition score (operation 614). Note that the behavior changes are modeled within each domain separately. For each domain, the system determines the cluster to which a user belongs each day, and then computes the likelihood of transitions between clusters from one day to the next. For example, the system may determine that a user belongs to cluster 1 on a particular day, and that the same user has a 20% chance to move to cluster 2 the next day. In some embodiments, the system applies a Markov model to model the user's behavior change. More specifically, the system models the user behavior over time as a Markov sequence, where a user belongs to one cluster (or state) each day, transitioning between clusters (or states) on a daily basis. The system detects unusual changes based on rare transitions given the total likelihood of transitions. For each user, the total likelihood of all transitions made by the user over the entire time span can be computed using $Q_d$, and the transition score $s_d^u$ for each user $u$ within domain $d$ can be calculated by estimating the user's total transition likelihood. In some embodiments, $s_d^u$ can be calculated as $s_d^u = p_d(c_0) \prod_{t=1}^{n-1} q_d\left(c_t^u, c_{t+1}^u\right)$, where $p_d(c_0)$ is the prior probability of being in state $c_0$, which is the start state for user $u$. Note that users are ranked based on their transition scores; the lower the transition score, the higher the anomaly ranking. Hence, a user with the rarest transitions compared with her peers would be the most suspicious. In some embodiments, the system penalizes a user for the least likely transition and computes the anomaly score using that rarest transition.

Here, $s_d^u$ can be calculated as $s_d^u = \min q_d\left(c_t^u, c_{t+1}^u\right)$. Once anomaly scores for the same set of users within each domain are obtained, the system can combine this information from the different domains to generate a final score for each user (operation 616). In some embodiments, the final score is computed based on a user's worst rank (i.e., the smallest transition score) from all the domains. $s_{final}^u = \min_d\left(s_d^u\right)$. The final ranking for each user thus reflects the highest suspicious indicator score across all the domains.

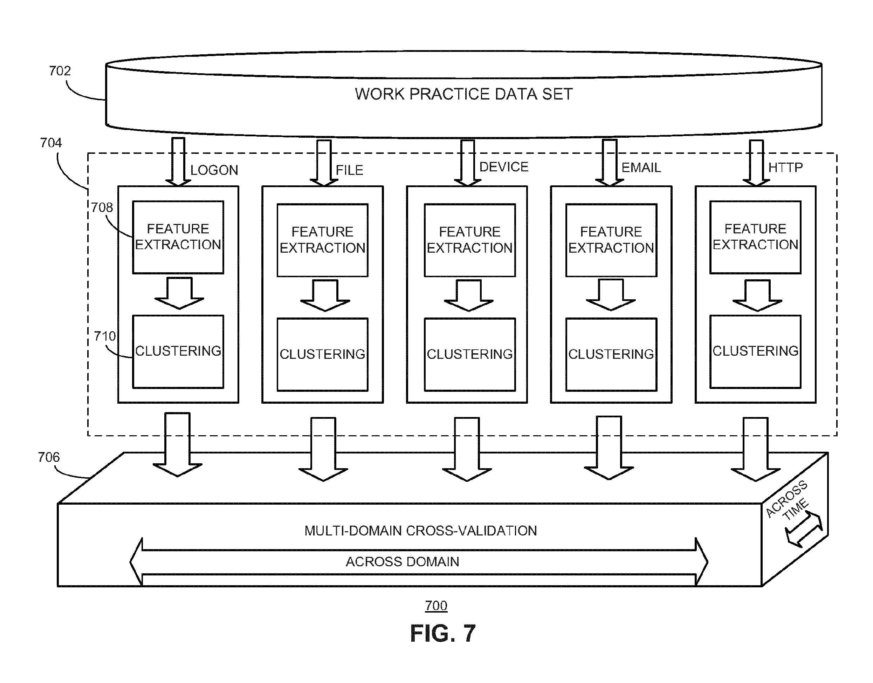

FIG. 7 presents a diagram illustrating a high-level description of the anomaly-detection framework, in accordance with an embodiment of the present invention. In FIG. 7, the framework 700 includes multiple layers, including a top data-input layer 702, a middle single-domain modeling layer 704, and a bottom global modeling layer 706.

Data-input layer 702 handles receiving the work practice data set for a population. In some embodiments, the data may be received from the company, which has recorded work practice data of its employees, as a data package. In some embodiments, data-input layer 702 may directly couple to a server that is configured to record work practice data in real time.

Single-domain modeling layer 704 includes a number of independent branches, depending on the number of domains being analyzed. In FIG. 7, five domains: logon, file, device, email, and HTTP, are included in single-domain modeling layer 704. Work practice data from data-input layer 702 are categorized to different domains and are fed through each domain branch separately. Within each domain, feature extraction and clustering are performed by a feature extraction module (such as feature extraction module 708) and a clustering module (such as clustering module 710) to model users' per domain behavior. Similarly behaved users within each domain are clustered together, and each user is clustered with a cluster index, indicating to which cluster he belongs to in each domain. In some embodiments, a vector of cluster probability is used to label each user. Note that in this layer, outlier anomalies within each domain can be identified.

Global modeling layer 706 performs multi-domain cross-validation to identify blend-in anomalies. In some embodiments, for each domain, global modeling layer 706 may use cluster labels from all but one domain as features for learning, and evaluates the predictability of the target domain. In addition, the evaluated results from all domains are combined to generate a combined result. In addition to multi-domain cross-validation, global modeling layer 706 also detects temporal inconsistency among users. Note that to establish a temporal model, the data going from data-input layer 702 to single-domain modeling layer 704 should also be sorted based on timestamps. Depending on the granularity, data within a time unit, such as a day, a week, or a month, can be placed into the same bin. The following feature-extraction and clustering operations in single-domain modeling layer 704 should be performed for each bin in turn. Global modeling layer 706 then models users' behavior changes over time based on how a user transitions between clusters from one day to the next. Users with the rarest transitions are often identified as anomalies. Based on the multi-domain cross-alidation result and the temporal inconsistency detection result, global modeling 706 can output a suspect list that may include all different types of anomalies, including but not limited to: the statistical outliers, the blend-in anomalies, and the anomalies due to temporal-inconsistency.

Note that by allowing per-domain feature extraction and clustering, embodiments of the present invention allow per-domain analysis, thus enabling more sophisticated reasoning and concrete conclusions by providing a detailed explanation about why and how each malicious activity is detected. This provides benefits that go beyond merely detecting malicious activities. Moreover, the per-domain analysis facilitates per-domain evaluation, including which activity domain can detect what types of malicious activity, and at what level of accuracy and fault rate, etc. In addition, the per-domain modeling also provides adaptability to various data types. When dealing with massive amounts of data, it is typical to keep receiving more data, and these additional data may include new activity domains, or new features within an existing domain. The per-domain modularity allows the system to adapt to and include new data in the analysis without necessarily having to repeat every step (of data treatment, learning, modeling and analysis) on the entire available dataset. In other words, new data can be considered after running previous models, and the results can be integrated without necessarily having to rerun all models on all previously existing domain data. The per-domain modularity also makes it possible to process data, learn and apply models, and run the analysis, on a separate machine for each domain, thereby addressing scalability issues and boosting machine performance. When combining results from the multiple domains or sources, the system weights each domain output differently. The weighting can be based on the relevance and/or utility of each domain to the problem, and based on the quality of data available for each domain. Moreover, domains can be disregarded if strong correlation with other domains is observed.

## Computer System

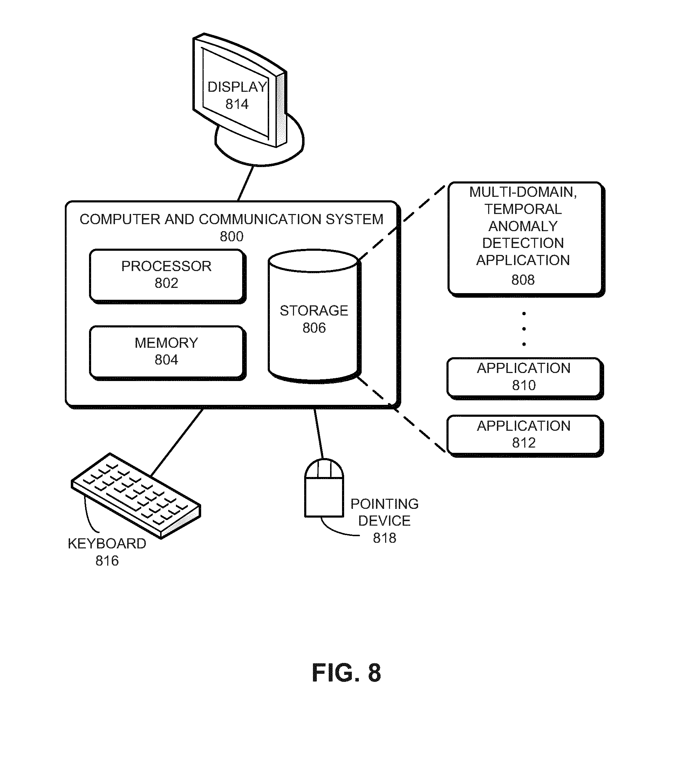

FIG. 8 illustrates an exemplary computer system for multi-domain, temporal anomaly detection, in accordance with one embodiment of the present invention. In one embodiment, a computer and communication system 800 includes a processor 802, a memory 804, and a storage device 806. Storage device 806 stores a multi-domain, temporal anomaly detection application 808, as well as other applications, such as applications 810 and 812. During operation, multi-domain, temporal anomaly detection application 808 is loaded from storage device 806 into memory 804 and then executed by processor 802. While executing the program, processor 802 performs the aforementioned functions. Computer and communication system 800 is coupled to an optional display 814, keyboard 816, and pointing device 818.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The foregoing descriptions of various embodiments have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention.

**Claims**

1. A computer system for identifying anomalies, comprising:

   a data-obtaining mechanism configured to obtain work practice data associated with a plurality of users, wherein the work practice data includes a plurality of user events;
   a data-categorizing mechanism configured to categorize the work practice data into a plurality of domains based on types of the user events;
   a modeling mechanism configured to model user behaviors within a respective domain based on work practice data associated with the respective domain; and
   an anomaly-detection mechanism configured to detect at least one anomalous user based on modeled user behaviors from the multiple domains.

2. The computer system of claim 1, wherein the plurality of domains includes one or more of:

   a logon domain;
   an email domain;
   a Hyper Text Transfer Protocol (HTTP) domain;
   a file domain; and
   a device domain.

3. The computer system of claim 1, wherein while modeling the user behaviors within the respective domain, the modeling mechanism is configured to:

   construct feature vectors for the plurality of users based on the work practice data associated with the respective domain; and
   apply a clustering algorithm to the feature vectors, wherein a subset of users are clustered into a first cluster.

4. The computer system of claim 3, further comprising an anomaly-score calculator configured to calculate an anomaly score associated with a respective user within a second domain based on a probability that the user is clustered into a second cluster into which other users within the subset of users are clustered.

5. The computer system of claim 1, wherein while modeling the user behaviors within a respective domain, the modeling mechanism is further configured to model changes in the user behaviors within the respective domain by clustering users within the respective domain based on work practice data associated with a time instance.

6. The computer system of claim 5, wherein while modeling the changes in the user behaviors, the modeling mechanism is further configured to calculate a probability of a user transitioning from a first cluster at a time instance to a second cluster at a subsequent time instance.

7. The computer system of claim 1, wherein while detecting the at least one anomalous user, the anomaly-detection mechanism is configured to calculate a weighted sum of anomaly scores associated with the at least one anomalous user from the plurality of domains.

FIG. 1

EP 2 908 495 A1

204

222

214

218

220

206

216

FIG. 2

202

212

224

START

RECEIVE WORK PRACTICE
DATA
302

CATEGORIZE WORK
PRACTICE DATA INTO
MULTIPLE DOMAINS
304

ASSOCIATE TAGS WITH
EVENTS
306

CONSTRUCT FEATURE
VECTORS
308

PER-DOMAIN USER
CLUSTER
310

CALCULATE DOMAIN
PREDICTABILITY
312

COMBINE ANOMALY
SCORES FROM MULTIPLE
DOMAINS
314

OUTPUT AGGREGATED
ANOMALY SCORES
316

END

FIG. 3

|  | LOGON | DEVICE | FILE | HTTP | ... |
|---|---|---|---|---|---|
| User 1 | 1 | 3 | 4 | 2 | |
| User 2 | 1 | 2 | 3 | (1) | |
| User 3 | 2 | 2 | 3 | 2 | |
| User 4 | 1 | 2 | 3 | (1) | |
| User 5 | 1 | 2 | 3 | (1) | |
| User 6 | 1 | 2 | 3 | (1) | |
| User 7 | 1 | 2 | 3 | (~~2~~) | |

CLUSTER

400

FIG. 4

## FUSION ALGORITHM

1: **for** $s = 1$ **to** $m$ **do**

2:      **for** $i = 1$ **to** $n$ **do**

3:          $m_i^s$ = miss prediction score for user $i$ in source $s$

4:          $p^s = \log \dfrac{n}{\sum_{j=1}^{n} m_i^s}$   {source predictability}

5: **for** $i = 1$ **to** $n$ **do**

6:      **for** $s = 1$ **to** $m$ **do**

7:          $a_i^s = m_i^s * p^s$   {adjust to reflect source predictability}

8: $F \leftarrow 0;$

9: **for** $i = 1$ **to** $n$ **do**

10:          $f_i = \sum_{s=1}^{m} a_i^s$   {final user score}

11:          $F = F \cup \{f_i\}$

12: **return** $F$

## FIG. 5

EP 2 908 495 A1

START

RECEIVE WORK PRACTICE
DATA AND BIN DATA INTO
(USER, DAY) RECORDS
602

CATEGORIZE WORK
PRACTICE DATA INTO
MULTIPLE DOMAINS
604

APPLY TAGS TO EVENTS
606

CONSTRUCT FEATURE
VECTORS
608

PER-DOMAIN USER
CLUSTER
610

CONSTRUCT TRANSITION
PROBABILITY MATRIX
612

CALCULATE TRANSITION
SCORE
614

COMBINE RESULTS FROM
MULTIPLE DOMAINS
616

END

**FIG. 6**

EP 2 908 495 A1

WORK PRACTICE DATA SET

702

704

708

710

706

LOGON | FILE | DEVICE | EMAIL | HTTP

FEATURE EXTRACTION

CLUSTERING

MULTI-DOMAIN CROSS-VALIDATION

ACROSS DOMAIN

ACROSS TIME

700

**FIG. 7**

DISPLAY
814

COMPUTER AND COMMUNICATION SYSTEM
800

PROCESSOR
802

MEMORY
804

STORAGE
806

MULTI-DOMAIN,
TEMPORAL
ANOMALY
DETECTION
APPLICATION
808

APPLICATION
810

APPLICATION
812

KEYBOARD
816

POINTING
DEVICE
818

FIG. 8

Europäisches
Patentamt

European
Patent Office

Office européen
des brevets

# EUROPEAN SEARCH REPORT

Application Number

EP 15 15 3865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HODA ELDARDIRY ET AL: "Multi-Domain Information Fusion for Insider Threat Detection", SECURITY AND PRIVACY WORKSHOPS (SPW), 2013 IEEE, IEEE, 23 May 2013 (2013-05-23), pages 45-51, XP032439917, DOI: 10.1109/SPW.2013.14 ISBN: 978-1-4799-0458-7 * the whole document * | 1-7 | INV. H04L29/06 G06F21/55 |

-----

TECHNICAL FIELDS
SEARCHED        (IPC)

H04L

The present search report has been drawn up for all claims

| Place of search | Date of completion of the search | Examiner |
|---|---|---|
| The Hague | 13 July 2015 | Raposo Pires, João |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)